# NEUE EUROPÄISCHE PATENTSCHRIFT

(11) **EP 0 954 359 B2**
(45) Veröffentlichungstag und Bekanntmachung des Hinweises auf die Entscheidung über den Einspruch: **14.01.2009**
(45) Hinweis auf die Patenterteilung: 27.09.2000
(21) Anmeldenummer: 97954743.7
(22) Anmeldetag: 13.12.1997
(51) Int. Cl.: A63C 17/26

(54) **VERFAHREN ZUR BESTIMMUNG VON FORTBEWEGUNGSGRÖSSEN UND DAZUGEHÖRIGES RAD FÜR ROLLSCHUHE UND ROLLBRETTER**
METHOD FOR DETERMINING THE RATES OF MOTION AND WHEEL FOR ROLLER SKATES AND SKATEBOARD
PROCEDE DE DETERMINATION DE VITESSES DE DEPLACEMENT ET ROUE CORRESPONDANTE POUR PATINS A ROULETTES ET PLANCHES A ROULETTES

(30) Priorität: 19.12.1996 DE 19653117
(43) Veröffentlichungstag der Anmeldung: 10.11.1999
(73) Patentinhaber: Groos, Daniel, 80796 München (DE)
(72) Erfinder: Groos, Daniel, 80796 München (DE)
(74) Vertreter: Kudlek, Franz Thomas
(86) Internationale Anmeldenummer: PCT/EP1997/007019
(87) Internationale Veröffentlichungsnummer: WO 1998/026846

(56) Entgegenhaltungen:
- EP-A1- 0 487 405
- WO-A1-94/05965
- CN-A- 1 064 750
- DE-A- 19 714 126
- DE-A- 19 717 589
- DE-U- 29 616 211
- DE-U- 29 708 535
- DE-U- 29 712 723
- DE-U- 29 713 992
- FR-A- 2 710 985
- US-A- 2 354 708
- US-A- 4 011 476
- US-A- 4 298 910
- US-A- 4 363 502
- US-A- 4 680 454
- US-A- 5 170 161
- US-A- 5 483 827
- US-A- 5 580 093

## Beschreibung

Die vorliegende Erfindung betrifft ein Verfahren zur Bestimmung von Fortbewegungsgrößen und ein dazugehöriges Rad für Rollschuhe und Trockenskier nach dem Oberbegriff des Patentanspruchs 12 bzw. des Patentanspruchs 1.

An den Füßen anbringbare Sportgeräte, beispielsweise Inline-Skates, Rollschuhe, Trockenskier, Skateboards oder Snakeboards, erfreuen sich immer größerer Beliebtheit. Es besteht ein Bedürfnis, die unter Zuhilfenahme derartiger Sportgeräte erbrachten sportlichen Leistungen, beispielsweise zurückgelegte Strecken oder erreichte Geschwindigkeit (momentane Geschwindigkeit, Maximalgeschwindigkeit, Durchschnittsgeschwindigkeit), zu ermitteln.

Aus der US 4 689 557 ist ein Fahrzeugrad bekannt, bei dem die Geschwindigkeitsmessung durch in der Radachse angeordnete Mittel realisierbar ist. Die in dieser Druckschrift beschriebene Konstruktion ist jedoch im Bereich der wesentlich kleiner bauenden Räder für Rollschuhe und Rollbretter nicht verwendbar, da beispielsweise das erzeugte Signal mittels einer sehr aufwendigen Signalabnahmekonstruktion abgenommen werden muß.

Aus der JP 62-177 453 A ist ein Fahrrad bekannt, das die Geschwindigkeit über ein Zyklometer, bestehend aus einem umlaufenden Magneten und einem feststehenden Sensor, bestimmt. Der dort beschriebene Mechanismus ist jedoch für Rollschuhe und Rollbretter, welche extremen Stoßbelastungen ausgesetzt sind, nicht geeignet.

Aus dem DE-GM 92 09 825.8 ist ein Road-Skate mit einem Fahrtcomputer bekannt, welcher am Schuh des Road-Skate angebracht ist. Zur Übermittlung von Daten von Rollen des Road-Skates an diesen Fahrtcomputer ist ein Reibrad vorgesehen, das mit einem an der Rollenaufhängung angebrachten Mitnehmerrad zusammenwirkt. Dieser Mechanismus wird als sehr aufwendig und störanfällig angesehen. Ferner baut er sehr groß.

Aus dem DE-GM 296 06 965 ist es bekannt, eine Rolle für Rollschuhe mit einem Magneten und einer Spule zur Erzeugung eines Induktionsstromes zur Speisung eines lichtausstrahlenden Elements vorzusehen. Diese Druckschrift befaßt sich nicht mit der Messung von Leistungsparametern eines Benutzers.

Aus der DE 44 44 315 A1 ist es bekannt, an einer mit einer Rolle fest verbundene Achse einen Dynamo zur Stromerzeugung zum Betreiben eines Lichtes vorzusehen. Auch dieser Mechanismus erweist sich in der Praxis als sehr aufwendig, wobei ferner durch den Dynamo eine starke, die Fortbewegung behindernde Reibkraft erzeugt wird. Für Rollen, die sich um eine drehfest angeordnete Achse drehen, ist dieser Mechanismus ungeeignet.

Schließlich ist aus dem deutschen Gebrauchsmuster DE 296 16 211 U ein Rollschuh mit einem Rahmen, einem mit dem Rahmen verbindbaren Schuh und an oder in dem Rahmen gehalterten Rollen bekannt, bei dem an einer der Rollen ein Kontaktgeber und am Rahmen ein mit einem Sender gekoppelter Kontaktaufnehmer angeordnet ist, wobei dem Sender ein vom Rollschuhträger mitführbarer, mit einem zur Leistungsdatenanzeige eingerichteten Display ausgestatteter Empfänger zugeordnet ist.

Aufgabe der Erfindung ist die Zurverfügungstellung eines Rades für Rollschuhe und Trockenskier, mit welchem in einfacher, robuster und preiswerter Weise Leistungsparameter eines Benutzers gemessen werden können, sowie eines entsprechenden Verfahrens.

Diese Aufgabe wird gelöst durch ein Rad gemäß Anspruch 1 sowie ein Verfahren gemäß den Anspruch 12.

Erfindungsgemäß ist es nun möglich, bei Rollschuhen und Trockenskier Mittel zur Messung der Geschwindigkeit des Rades und eine Steuerelektronik zur Signalverarbeitung zur Bestimmung von Fortbewegungsgrößen eines Benutzers im Rad vorzusehen. Dies führt zu einer kompakteren und mechanisch robusteren Ausgestaltung dieser Mittel, wodurch ihre Zuverlässigkeit gesteigert ist. Unter dem Begriff" im Laufrad angeordnete Mittel" werden hierbei sämtliche zwischen Radachse und Radumfang angeordnete Mittel verstanden, also insbesondere unmittelbar im Radkörper vorgesehene Mittel, sowie beispielsweise in Speichenräder einbringbare Einschub- bzw. Einsetzteile.

Vorteilhafte Ausgestaltungen der Erfindung sind Gegenstand der Unteransprüche.

Nach einer vorteilhaften Ausgestaltung weist das Rad eine an seiner drehfesten Drehachse angebrachte Spule und einen die Spule konzentrisch umgebenden, mit dem Radkörper verbundenen Magneten auf. Bei Drehung des Rades dreht sich somit der Magnet um die Spule, so daß ein Strom in der Spule induziert wird. Der induzierte Strom ist proportional zur Drehgeschwindigkeit des Rades. Der induzierte Strom (bzw. die induzierte Spannung) kann in einfacher Weise der Steuerungselektronik, die eine Signalverarbeitung durchführt, zugeführt werden. Die Ausbildung mit Magnet und Spule erweist sich als sehr robust und klein bauend. Ferner ist gegebenenfalls keine zusätzliche Batterie zur Stromversorgung der Steuerungselektronik notwendig. Vorteilhafterweise ist mit dem erzeugten Strom ein Akkumulator aufladbar, der eine Versorgung der Steuerungselektronik und/oder weiterer Komponenten mit Gleichstrom gewährleistet. Der Akkumulator sowie ein diesem vorgeschalteter Gleichrichter sind ebenfalls in das Rad integrierbar.

Es ist umgekehrt auch möglich, einen an der Drehachse angebrachten Magneten, und eine den Magneten konzentrisch umgebende, mit dem Radkörper verbundene Spule zu vorzusehen.

Die im Rad angeordnete Steuerungselektronik weist Mittel zur Bestimmung seiner Drehgeschwindigkeit und Mittel zur Bestimmung seiner Bodenberührung auf. Da beispielsweise bei Rollschuhen oder Inline-Skates typischerweise nur jeweils ein Rollschuh bzw. Skate Bodenkontakt hat, ist es hierdurch möglich, den jeweils Bodenkontakt aufweisenden Rollschuh bzw. Skate zu bestimmen, und die Drehgeschwindigkeit bzw. Fortbewegungsgeschwindigkeit auf dieser Basis zu bestimmen.

Vorteilhafterweise werden Kraftmesser, insbesondere Piezoelemente, zur Messung der Bodenberührung verwendet. Derartige Piezoelemente bauen sehr klein, sind robust und können an einer Vielzahl von Stellen innerhalb des Laufrades oder in dessen unmittelbarer Umgebung angeordnet werden.

Zweckmäßigerweise ist wenigstens ein Piezoelement im Radkörper, insbesondere in einer äußeren Lauffläche des Rades, zur Messung einer Druckkraft und/oder zur Messung einer Scherkraft zwischen Boden und Rad angeordnet. Diese Anordnung ermöglicht eine besonders genaue und zuverlässige Messung. Je nach gewünschten Anforderungen an die Genauigkeit kann die Anzahl der an der Lauffläche angeordneten Piezoelemente variiert werden.

Zweckmäßigerweise ist eine Anzahl von Piezoelementen über den Umfang des Radkörpers verteilt angeordnet. Hierdurch ist gewährleistet, daß ein Bodenkontakt bzw. eine Richtungsänderung unmittelbar feststellbar ist.

Es ist ferner in vorteilhafter Weise möglich, wenigstens ein Piezoelement an der Drehachse, insbesondere im Bereich von Achsaufhängungen, zur Messung einer Druckkraft und/oder einer Scherkraft zwischen Boden und Rad und/oder einer durch eine Richtungsänderung des Rades hervorgerufenen Präzessionskraft vorzusehen. Hierbei ist besonders vorteilhaft, daß die Größe bzw. Anzahl der Kraftmesser bzw. Piezoelemente klein gehalten werden kann, zudem sind sie an der drehfesten Achse montiert, was im Vergleich zur Anbringung an dem rotierenden Radkörper zu einem geringeren Verschleiß führt.

Es ist ferner möglich, wenigstens ein Piezoelement in den Achsaufhängungen und/oder an den Lagern des Rades zur Messung einer Druckkraft und/oder einer Scherkraft zwischen Boden und Rad und/oder eine durch eine Richtungsänderung des Rades hervorgerufenen Präzessionskraft vorzusehen. Derart angeordnete Piezoelemente bauen ebenfalls klein und sind wegen ihrer drehfesten Anordnung weniger verschleißanfällig.

Zweckmäßigerweise sind Magnet und Spule als Bauteile eines Generators modulartig in den Radkörper integrierbar, wobei die Generatorwelle als Drehachse verwendbar ist. Diese modulartige Bauweise erweist sich als besonders kostengünstig, da sie in ein entsprechend ausgehöhltes Rad in einfacher Weise einführbar ist. Die Montagearbeit am Rad ist dadurch vermindert.

Vorteilhafterweise ist die Steuerungselektronik in den Radkörper integriert. Hierdurch sind die Signalwege, beispielsweise von der Spule oder von den verwendeten Piezoelementen, sehr klein, wodurch eine schnelle und zuverlässige Datenübertragung bzw. Verarbeitung gewährleistet ist.

Zweckmäßigerweise sind Funkverbindungsmittel zum Datenaustausch mit einem weiteren Rad, insbesondere einem Rad eines zweiten Rollschuhs und/oder mit einer insbesondere armbanduhrartig ausgebildeten Anzeigevorrichtung zum Anzeigen der ermittelten Daten vorgesehen. Hierdurch sind die ermittelten Daten in einfacher Weise dem Benutzer anzeigbar. Ferner können durch eine Datenübertragung zwischen einzelnen Rollen die wesentlichen Bauteile der Steuerungselektronik nur in einer Rolle vorgesehen sein, wobei diese auch entsprechende, von weiteren Rollen übermittelte Daten verarbeitet.

Vorteilhafterweise kann ein über die Magnetspulenanordnung bzw. den Generator erzeugter Strom für weitere Funktionen, insbesondere zur Speisung eines mit dem Sportgerät verbundenen Diodenrücklichts, verwertet werden. Hierdurch ist die Verkehrssicherheit eines mit dem erfindungsgemäßen Rad versehenen Rollschuhs oder Rollbretts erhöht. Auch akustische Wamvorrichtungen können auf diese Weise betrieben werden.

Gemäß einer besonders bevorzugten Ausführungsform der Erfindung weisen die Mittel zur Bestimmung der Bodenberührung eine Einrichtung zur Aufnahme einer die Drehgeschwindigkeit des Rades beschreibenden Meßkurve auf. Eine derartige Meßkurve weist bei Anheben und Aufsetzen des Rades vom bzw. auf den Boden bzw. Untergrund Knickstellen (Unstetigkeiten der Ableitung der Meßkurve) auf, welche beispielsweise von der im Rad integrierten Elektronik erfaßt werden können, wodurch die Bodenberührungsintervalle in einfacher Weise bestimmbar sind. Mittels dieser Meßkurve bzw. dieser Knickstellen sind auch bestimmte Fahrzustände des Rades, beispielsweise Beschleunigung, Konstantfahrt oder Abbremsen, erfaßbar. Um die Kosten für die Bestückung eines Rollschuhs oder Rollbretts mit einer Tachometereinrichtung gering zu halten, ist vorzugsweise nur ein erfindungsgemäßes Rad pro Skate- bzw. Rollschuhpaar vorgesehen. Die von einem Benutzer zurückgelegte Strecke, während der das betreffende Rad aufweisende Schuh keinen Bodenkontakt aufweist, kann aus den unmittelbar vorhergehenden Messungen extrapoliert werden.

Gemäß des erfindungsgemäßen Verfahrens wird die Bodenauflage des wenigstens einen Rades, an welchem die Drehgeschwindigkeit festgestellt wird, bestimmt. Hierdurch ist eine verbesserte Meßgenauigkeit möglich, da stets lediglich Meßdaten eines in Bodenkontakt befindlichen Rades verarbeitet werden. Es ist beispielsweise auch möglich, im Falle der gleichzeitigen Auflage zweier mit den erfindungsgemäßen Meßeinrichtungen versehener Rollen, beide Meßwerte aufzunehmen und daraus einen Mittelwert zu bilden. Auch hierdurch ist die Meßgenauigkeit weiter erhöhbar.

Bevorzugte Ausgestaltungen der Erfindung werden nun anhand der beigefügten Zeichnungen im einzelnen erläutert. Es zeigt
- Figur 1: eine schematische Teilschnittansicht einer ersten Ausführungsform des erfindungsgemäßen Rades,
- Figur 2: eine schematische Teilschnittansicht der zweiten Ausführungsform des erfindungsgemäßen Rades,
- Figur 3: eine schematische Teilschnittansicht einer nicht beanspruchten Ausführungsform eines Rades,
- Figur 4: eine schematische Teilschnittansicht einer dritten Ausführungsform des erfindungsgemäßen Rades,
- Figur 5: eine Meßkurve, in der Umdrehungen/Sekunde eines erfindungsgemäßen Rades gegen die Zeit aufgetragen sind, und
- Figur 6: in perspektivischer Ansicht eine bevorzugte Ausführungsform eines erfindungsgemäßen Rades, wobei zur Veranschaulichung zusätzlich die Anordnung des Rades an Rollschuhen sowie die Übertragung von Meßdaten an eine annbanduhrartig ausgestattete Anzeigevorrichtung dargestellt sind.

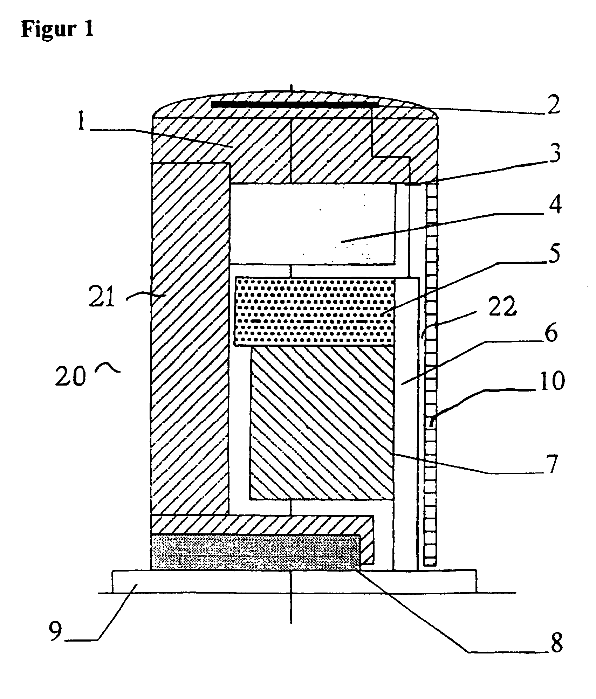

In den Figuren 1 bis 4 sind Räder bzw. Laufrollen 20 dargestellt, die um eine drehfeste Achse 9 bzw. 19 drehbar sind. Derartige Räder finden beispielsweise bei Rollschuhen oder Inline-Skates, aber auch bei Skateboards, Snakeboards oder Trockenskiern Verwendung. Die Laufrollen sind symmetrisch um die Achse 9, 19 ausgebildet, so daß auf eine Darstellung des unterhalb der Achse 9 liegenden Teiles verzichtet wurde.

In Figur 1 weist Rad 20 einen Radkörper 21 auf, welcher mit einer Ausnehmung 22 versehen ist, in welche ein Permanentmagnet 4, eine Spule 5 und eine Steuerungselektronik 7 einbringbar sind. Steuerungselektronik 7 und Spule 5 sind hierbei drehfest bezüglich der drehfesten Achse 9 angebracht. Der wenigstens eine Permanentmagnet 4 ist drehfest an dem Radkörper 21 gehaltert, so daß er mit diesem um Achse 9 drehbar ist. Die Spule 5 ist an einer Spulenhalterung 6 gehaltert.

Es ist ein Schutzdeckel 10 vorgesehen, der die in der Ausnehmung 22 eingeführten Bauteile vor äußeren Einflüssen schützt. Radkörper 21 ist über ein Lager 8 drehbar an der Achse 9 gehaltert.

In der Lauffläche 1 des Radkörpers 21 ist ein Piezoelement 2 angeordnet. Bei Krafteinwirkung auf das Piezoelement 2 erzeugt dieses einen Strom (bzw. eine Spannung), welcher über Leitungen und einen Schleifkontakt 3 an die Steuerungselektronik 7 übertragbar ist.

Das Piezoelement 2 kann zur Messung einer Druckkraft zur Bestimmung des Bodenkontaktes des Rades 20 und/oder zur Bestimmung einer Scherkraft zwischen Boden und Rad verwendet werden. Eine Druckkraft tritt auf, wenn das Rad 20 belastet wird, d.h. wenn das Gewicht des Benutzers auf dem mit dem Rad 20 verbundenen Rollschuh oder Inline-Skate liegt. Eine Scherkraft tritt auf, wenn die Aufsetzrichtung des Rades nicht der tatsächlichen Fortbewegungsrichtung des Benutzers entspricht. Ein derartiger Winkel zwischen Aufsetzrichtung und Fortbewegungsrichtung tritt insbesondere bei Rollschuhen und Inline-Skates häufig auf, da hier zur Fortbewegung bevorzugt der sogenannte "Schlittschuhschritt" verwendet wird. Es ist möglich, mehrere Piezoelemente 2 in der Lauffläche 1 anzuordnen, wobei bestimmte Piezoelemente 2 die Druckkraft, und andere Piezoelemente die Scherkraft messen können.

Bei einer Drehung des Rades 20 kreisen die mit dem Radkörper 21 fest verbundenen Magneten um die fest auf der drehfesten bzw. starren Achse 9 angebrachten Spulen, in denen eine von der Umlaufgeschwindigkeit der Rolle abhängige Spannung induziert wird. Über einen AD-Wandler und eine Steuerfunktion wird der erzeugten Spannung eine Umlaufgeschwindigkeit zugeordnet, aus der bei bekanntem Rollendurchmesser die Strecke, die das Rad zurückgelegt hat, ermittelt wird. Es sei an dieser Stelle erwähnt, daß durch dieses Meßverfahren auch eine Rückwärtsbewegung des Benutzers feststellbar ist.

Die Daten über den Bodenkontakt der Räder werden, insbesondere über einen Schleifkontakt 3, an die Steuerelektronik 7 übertragen.

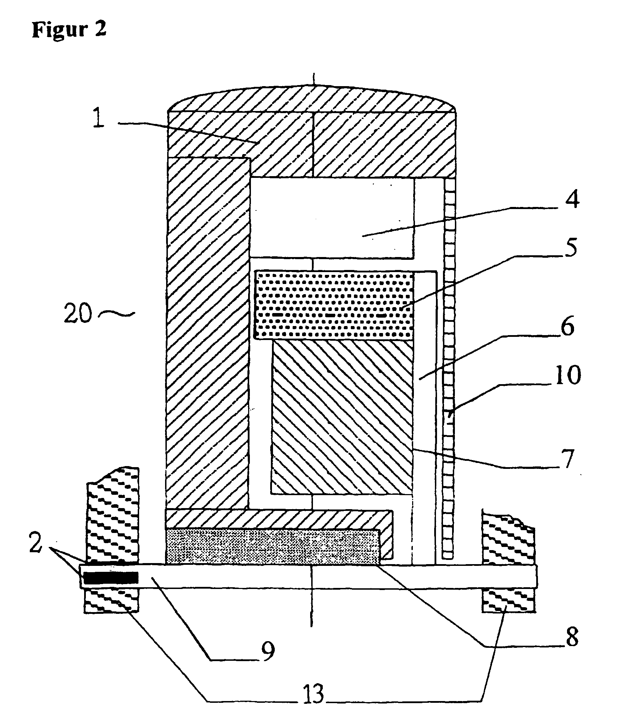

In Figur 2 ist eine weitere Ausführungsform des erfindungsgemäßen Rades dargestellt. Gleiche Bauteile sind mit gleichen Bezugszeichen versehen wie in Figur 1. Die Ausführungsform gemäß Figur 2 unterscheidet sich im wesentlichen von derjenigen der Figur 1 dadurch, daß die Kraftmesser bzw. Piezoelemente 2 in der drehfesten Achse 9 in Höhe wenigstens einer Achsaufhängung 13 integriert sind. Die auf die Rolle 20 wirkenden Kräfte, die beispielsweise unter Bezug auf Figur 1 beschrieben wurden, werden über die Achse 9 auf die in den Achsaufhängungen 13 angeordneten Piezoelemente übertragen. Zusätzlich zu der Messung einer Druckkraft bzw. einer Scherkraft, sind derart angeordnete Piezoelemente in der Lage, Präzessionskräfte bzw. Kreiseikräfte zu messen. Betrachtet man nämlich das Rad 20 als Kreisel, ist eine Richtungsänderung des Rollschuhs bzw. Inline-Skates, also auch eine Richtungsänderung der Drehachse 9, gleichbedeutend mit einer künstlichen Präzession. Je nach Grad der Richtungsänderung sind mehr oder weniger starke Lagerkräfte zu beobachten. Die Lagerkräfte sind demnach abhängig von Belastung des Rades 20 und dem Winkel zwischen Aufsetzrichtung und tatsächlicher Fortbewegungsrichtung, wobei hierbei zusätzlich Präzessionskräfte zur Messung ausgenutzt werden können.

Es ist in diesem Zusammenhang beispielsweise möglich, zur Vereinfachung der Datenverarbeitung herstellerseitig verschiedenen Winkelstellungen und/ oder verschiedenen Winkeländerungen des Rades entsprechende Meßreihen aufzunehmen, und diese in die Steuerungselektronik einzuprogrammieren. Hierdurch können tatsächlich gemessene Kraftwerte mit den Meßreihenwerten verglichen werden, wodurch eine Vereinfachung der Datenverarbeitung möglich ist.

Die drehfeste Anordnung der Piezoelemente 2, insbesondere im Bereich der Achsaufhängung, ermöglicht es, daß die Größe bzw. Anzahl der Piezoelemente sehr klein gehalten werden kann. Zudem ist hierdurch die mechanische Belastung bzw. der Verschleiß der Piezoelemente vermindert werden kann.

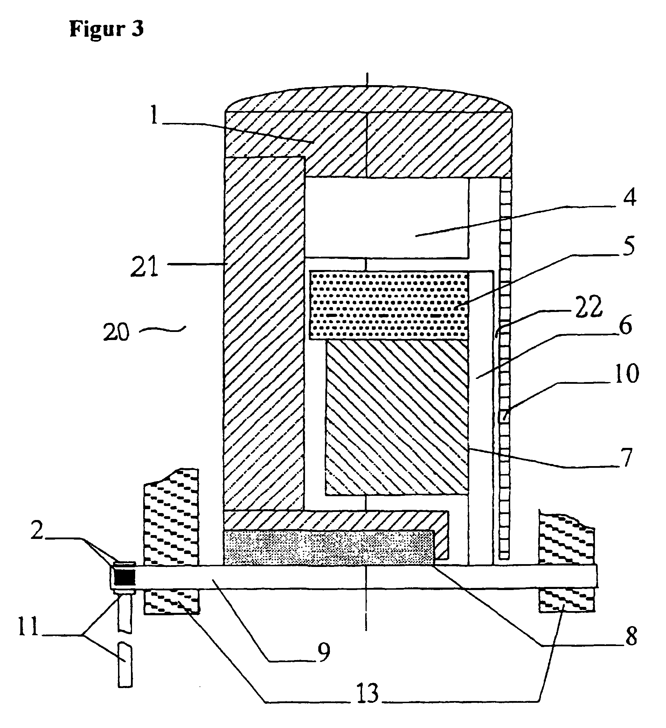

Eine nicht beanspruchte Ausführungsform eines Rades ist in Figur 3 dargestellt. Auch hier sind gleiche Bauteile mit den gleichen Bezugszeichen über den Rollenkörper 21 und die Achse 9 eine Kraftübertragung über einen Meßfühler 11 auf Piezoelemente 2 durchgeführt. Der Meßfühler 11 ist an einer außerhalb der Achsaufhängungen 13 vorgesehenen Verlängerung der Achse 9 angebracht. Die Länge des Meßfühlers ist etwas größer als der Radius des Rades, so daß ein Bodenkontakt des Rades 20 stets über den Meßfühler 11 feststellbar ist. Über den Meßfühler 11 sind, entsprechend den bereits beschriebenen Ausführungsformen, Druckkräfte und Scherkräfte an die entsprechend angeordneten Piezoelemente 2 übertragbar, so daß die notwendige Datenverarbeitung im wesentlichen der bereits beschriebenen entspricht.

Der Meßfühler kann beispielsweise in Form eines elastischen bzw. flexiblen lamellenartigen oder pinselartigen Elements ausgebildet sein. Er kann ferner als im wesentlichen starre Stange mit einem federnden Endbereich ausgebildet sein. Besonders bevorzugt ist die Messung von Bodenkontakt und Fahrwinkel mittels zweier Piezoelemente 2.

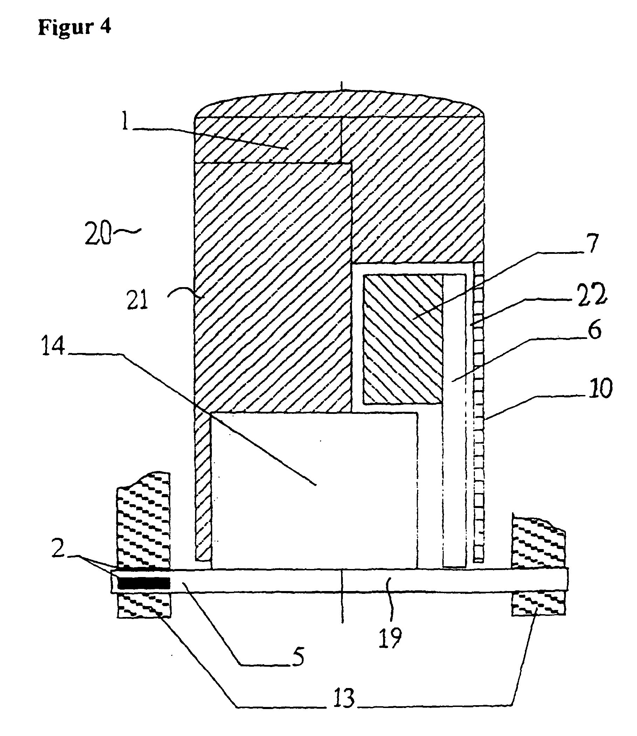

Figur 4 zeigt eine weitere Ausführungsform des erfindungsgemäßen Rades. Hier sind die zur Strom- bzw. Spannungserzeugung verwendeten Elemente, d.h. Permanentmagnet und Spule, modulartig in einen Generator 14 eingebracht. Die Welle des Generators 14 kann hierbei als drehfeste Welle 19 des Rades verwendet werden. Bringt man den Generator 14 in eine entsprechend Ausnehmung im Rollenkörper 21 ein, ist, je nach konstruktiver Ausgestaltung des Generators als Außenpol- oder Innenpolgenerator, entweder der Permanentmagnet oder die Spule drehfest mit Generatorachse 19 verbunden. Das Gehäuse des Generators 14 mit dem jeweils anderen zur Stromerzeugung notwendigen Element, d.h. Spule bzw. Permanentmagnet, ist drehbar um die Generatorachse 19 gelagert, und mit dem Rollenkörper 21 verbindbar. Bei Drehung des Rollenkörpers 21 um die als Drehachse dienende Generatorwelle 19 wird daher in der vorbeschriebenen Weise Strom bzw. Spannung erzeugt.

Die zur Kraftmessung vorgesehenen Piezoelemente 2 sind gemäß der in Figur 3 dargestellten Ausführungsform in der Drehachse 19 in Höhe der Achsaufhängungen ausgeführt. Es ist jedoch ebenfalls möglich, zur Kraftmessung eine der anderen beschriebenen Möglichkeiten zu verwenden.

Die jeweils ermittelten Daten werden in der Steuerelektronik 7 ausgewertet, und beispielsweise über eine Funkverbindung an einen Empfänger am Handgelenk des Benutzers übertragen, der sie auf einem armbaliduhrähnlichen Display angezeigt bekommt. Der erfindungsgemäß zur Messung von Leistungsparametern eines Benutzers erzeugte Strom reicht noch für weitere Anwendungen aus. Insbesondere ist es möglich, den Strom zum Betreiben eines an den Schuhen angebrachten Diodenrücklichts zu benutzen, wodurch die Sicherheit im Straßenverkehr erhöht ist. Auch eine Uhr oder ein Timer kann so betrieben werden. Hier erweist sich die Verwendung eines Akkumulators als vorteilhaft, welcher den erzeugten Strom über eine Gleichrichter glättet und speichert. So kann auch bei kurzzeitigem Rollenstillstand die Stromversorgung der Beleuchtung aufrechterhalten werden.

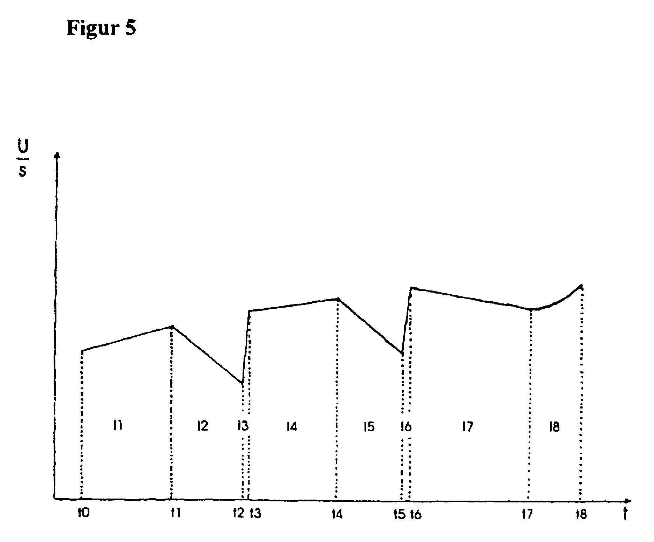

Unter Bezugnahme auf Figur 5 wird nun ein bevorzugtes Verfahren zur Bestimmung der Fortbewegungsgeschwindigkeit eines Rollschuhfahrers beschrieben. Hierbei sind die gemessenen Umdrehungen pro Sekunde eines Rades gegen die Zeit aufgetragen. Während der Intervalle I1 und I4 steigt die Drehgeschwindigkeit des Rades an. Zu Zeitpunkten t1 und t4 weist die Meßkurve Knickpunkte auf, an die sich Intervalle I2 und I5 abnehmender Drehgeschwindigkeit anschließen. Aus dem Knickverhalten der Meßkurve zu Zeitpunkten t1, t4 und der anschließenden Drehgeschwindigkeitsabnahme folgt, daß sich zu diesen Zeitpunkten das Rad vom Boden löst. Während der Intervalle I2 und I5 befindet sich das Rad in der Luft. Erst zu Zeitpunkten t2 und t5, welche durch ein Knickverhalten und einen anschließenden schnellen Anstieg der Drehgeschwindigkeit charakterisiert sind, trifft das Rad wieder auf dem Boden auf und erfährt eine Beschleunigung. Hierbei schließen sich an die durch den Aufschlag des Rades verursachte starke Beschleunigungsphasen (Intervalle I3 bzw. I6) die bereits erwähnten Intervalle I1 bzw. I4 an. Es sei angemerkt, daß der Übergang von I3 nach I4 bzw. I6 nach I7 in der Praxis glatter als in dieser schematischen Darstellung dargestellt verlaufen wird. Es sind ferner Intervalle I7 und I8 dargestellt. Bei Intervall I7 handelt es sich um eine Ausrollphase, in der die Drehgeschwindigkeit des Rades (ohne Knickverhalten) allmählich abnimmt. In Intervall I8 erfolgt anschließend eine Beschleunigung aus der Rollphase heraus, wobei auch hier kein Knickverhalten vorliegt, das Rad also nicht vom Boden abgehoben wird.

Als zweckmäßig erweist sich in diesem Zusammenhang die Aufnahme bzw. Einprogrammierung von Individualparametem eines Rollschuhfahrers in die Steuerelektronik. Es sei hier beispielsweise auf die Schrittlänge oder typische Aufsetzwinkel eines Rollschuhfahrers hingewiesen. Unter Verwendung derartiger Parameter läßt sich der von der Steuerelektronik auszuführende Rechenaufwand reduzieren.

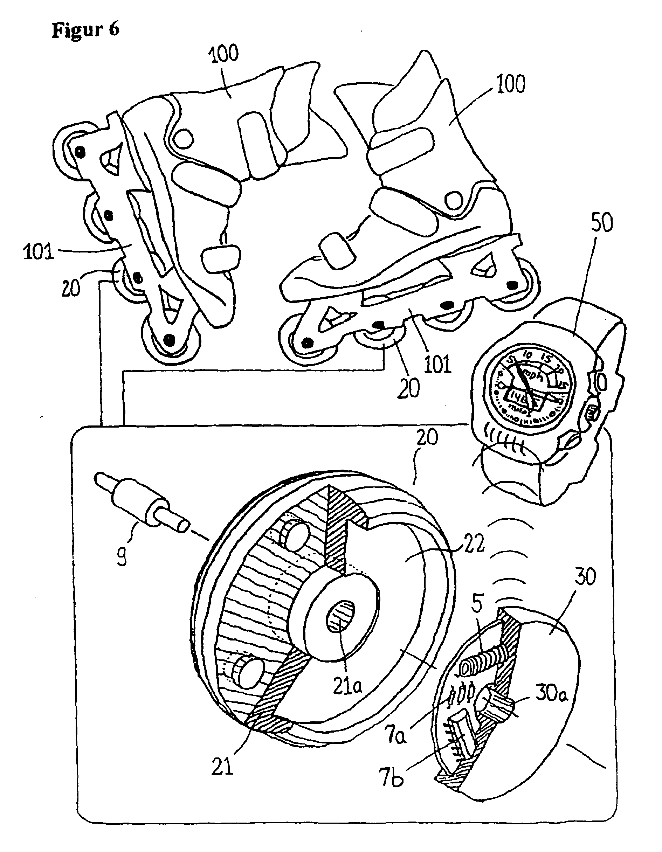

In Figur 6 ist schließlich eine weitere Ausführungsform eines Rades für Rollschuhe und Rollbretter perspektivisch dargestellt. Rad 20 weist hier einen mit einer Ausnehmung 22 ausgebildeten Radkörper 21 auf.

Wenigstens ein Permanentmagnet ist in geeigneter, nicht dargestellter Weise in den Radkörper 21 integrierbar.

Eine mögliche Positionierung eines erfindungsgemäßen Meßrades an einem Rollschuh 100 ist in Figur 6 ebenfalls schematisch dargestellt. Die Befestigung der Radachse 9 an einer Radschiene 101 erfolgt hierbei in an sich bekannter Weise, und soll hier nicht weiter erläutert werden.

In Ausnehmung 22 ist ein puckförmiges bzw. zylinderscheibenförmiges Bauteil 30 einführbar bzw. einpassbar. In diesem Bauteil 30 sind die oben beschriebenen elektronischen Komponenten zur Messung der Geschwindigkeit am Rad eingebracht. Schematisch sind (beispielhaft) eine Spule 5, Widerstände bzw. Verstärker 7a und ein Chip 7b der Steuerungselektronik 7 dargestellt. Diese Bauteile sind vorzugsweise in Bauteil 30, welches insbesondere aus Kunstharz besteht, eingegossen bzw. versiegelt. Bauteil 30 weist eine zentrale Ausnehmung 30a auf, welche bei Einführen des Bauteils 30 in die Ausnehmung 22 des Rades 20 mit einer dort ausgebildeten zentralen Ausnehmung 21a fluchtet. Durch die fluchtenden Ausnehmungen 21a, 30a ist die drehfeste Achse 9 durchführbar. Das Bauteil 30 ist mit Achse 9 drehfest verbindbar. Bei Abrollen des Rades verbleiben also Achse 9 und Bauteil 30 bezüglich des rotierenden Rades 20 drehfest. Durch Integration der Elektronikkomponenten in Bauteil 30 kann auf einen Schutzdeckel 10, wie er bei den anderen Ausführungsformen vorgesehen war, verzichtet werden. Eine derartige Konstruktion erweist sich als sehr robust. Ferner kann das die Steuerelektronik enthaltende Bauteil 30 modulartig ausgewechselt werden.

Mittels des Chips 7b sind aufgenommene Meßwerte über Funk auf eine armbanduhrartig ausgestaltete Anzeigeeinrichtung 50 übertragbar, wie in Figur 6 ebenfalls schematisch dargestellt.

## Patentansprüche

1. Rollschuh- oder Trockenskierrad mit einer drehfesten Drehachse (9, 19) und einem um die Drehachse drehbaren Radkörper,
**gekennzeichnet durch**
Mittel (4, 5) zur Messung der Geschwindigkeit des Rades und eine Steuerungselektronik (7) zur Signalverarbeitung zur Bestimmung von Fortbewegungsgrößen eines Benutzers mit Mitteln (7, 7a, 7b) zur Bestimmung seiner Drehgeschwindigkeit aus dieser Messung und Mitteln (7) zur Bestimmung der Bodenberührung des Rades, wobei das Mittel (4, 5) zur Messung der Geschwindigkeit des Rades und die Steuerungselektronik vollständig im Rad angeordnet sind.

2. Rad nach Anspruch 1, **gekennzeichnet durch** wenigstens eine an der Drehachse (9) drehfest gehalterte Spule (5) und wenigstens einen die Spule wenigstens teilweise umgebenden, am Radkörper (20) drehfest gehalterten Magneten (4).

3. Rad nach Anspruch 1, **gekennzeichnet durch** wenigstens einen an der Drehachse drehfest gehalterten Magneten (4) und wenigstens eine den Magneten (4) wenigstens teilweise umgebende, an dem Radkörper gehalterte Spule (5).

4. Rad nach Anspruch 1, **gekennzeichnet durch** wenigstens einen Kraftmesser (2), insbesondere ein Piezoelement, zur Messung der Bodenberührung.

5. Rad nach Anspruch 4, **dadurch gekennzeichnet, dass** wenigstens ein Piezoelement (2) im Radkörper (21), insbesondere in einer äußeren Lauffläche (1) des Rades (20) zur Messung einer Druckkraft angeordnet ist.

6. Rad nach Anspruch 5, **dadurch gekennzeichnet, dass** eine Anzahl von Piezoelementen (2) über den Umfang des Radkörpers (21) verteilt angeordnet ist.

7. Rad nach einem der vorstehenden Ansprüche, **dadurch gekennzeichnet, dass** Magnet (4) und Spule (5) als Bauteile eines Generators (14), welcher modulartig in den Radkörper integriert ist, ausgebildet sind, wobei eine Generatorwelle (19) des Generators als Drehachse des Rades dient.

8. Rad nach einem der vorstehenden Ansprüche, **dadurch gekennzeichnet, dass** es Funkverbindungsmittel zur Datenübertragung mit einem weiteren Rad (20), insbesondere einem Rad (20) eines zweiten Rollschuhs und/oder mit einer insbesondere armbanduhrartig ausgebildeten Anzeigevorrichtung zur Anzeige von ermittelten Daten aufweist.

9. Rad nach einem der vorstehenden Ansprüche, **dadurch gekennzeichnet, dass** die Mittel zur Bestimmung der Bodenberührung eine Einrichtung zur Aufnahme einer die Drehgeschwindigkeit des Rades beschreibenden Messkurve aufweisen.

10. Rad nach einem der vorstehenden Ansprüche, **gekennzeichnet durch** ein in den Radkörper (21) drehfest mit der Drehachse (9) eingebrachtes Bauteil (30), in welchem die Mittel (5, 7a, 7b) zur Bestimmung der Drehgeschwindigkeit des Rades wenigstens teilweise aufgenommen sind.

11. Rad nach Anspruch 10, **dadurch gekennzeichnet, dass** das Bauteil (30) aus Kunstharz besteht, in welches die Mittel zur Bestimmung der Drehgeschwindigkeit des Rades eingegossen sind.

12. Verfahren zur Bestimmung von Fortbewegungsgrößen, insbesondere Fortbewegungsgeschwindigkeit oder Fortbewegungsstrecke, eines sich auf einem Boden fortbewegenden Benutzers von Rollschuhen oder Trockenskiern unter Verwendung der Drehgeschwindigkeit wenigstens eines Rades des Rollschuhs oder Trockenskis**,**
**dadurch gekennzeichnet,**
**dass** zur Bestimmung der Fortbewegungsgrößen die Bodenberührung des Rades berücksichtigt wird, und eine die Drehgeschwindigkeit des Rades beschreibende Messkurve, insbesondere kontinuierlich, aufgenommen und die Bodenberührung anhand in dieser Messkurve auftretender Knickstellen ermittelt wird, wobei nur Messdaten eines in Bodenkontakt befindlichen Rades zur Bestimmung der Fortbewegungsgrößen verarbeitet werden.

## Claims

1. Roller skate or grass ski wheel with a rotationally fixed rotational axle (9, 19) and a wheel body which can be rotated about the rotational axle,
**characterised by**
means (4, 5) for measuring the speed of the wheel and control electronics (7) for signal processing for determining travel quantities of a user, including means (7, 7a, 7b) for determining the rotational speed of the wheel from this measurement and means (7) for determining a ground contact of said wheel, the means (4, 5) for measuring the speed of the wheel and the control electronics being completely disposed in the wheel.

2. A wheel according to claim 1, **characterised by** at least one coil (5) mounted in a rotationally fixed manner to the rotational axle (9) and at least one magnet (4) which at least partially surrounds the coil and which is fixed to the wheel body (20) in a rotationally fixed manner.

3. A wheel according to claim 1, **characterised by** at least one magnet (4), fixed to the rotational axle in a rotationally fixed manner, and at least one coil (5) which at least partially surrounds the magnet and which is fixed to the wheel body (20).

4. A wheel according to claim 1, **characterised by** at least one dynamometer (2), especially a piezo element, for measuring its contact with the ground.

5. A wheel according to claim 4, **characterised in that** at least one piezo element (2) is disposed in the wheel body (21), especially in an outer rolling surface (1) of the wheel (20) for measuring a force of pressure.

6. A wheel according to claim 5, **characterised in that** a number of piezo elements (2) is distributed about the circumference of the wheel body (21).

7. A wheel according to any one of the preceding claims, **characterised in that** the magnet (4) and coil (5) are configured as components of a generator (14) which is integrated into the wheel body in a modular manner, wherein a generator shaft (19) of said generator serves as said rotational axle of the wheel.

8. A wheel according to any one of the preceding claims, **characterised in that** it has radio connection means for data transfer with another wheel (20), particularly a wheel (20) of a second roller skate, and/or with a display device, especially configured in the manner of a wristwatch, for displaying of determined data.

9. A wheel according to any one of the preceding claims, **characterised in that** the means for determining ground contact includes a device for recording a measurement curve which describes the rotational speed of the wheel.

10. A wheel according to any one of the preceding claims, **characterised by** a component (30) disposed in the wheel body, fixed to the rotational axle (9) in a rotationally fixed manner, in which the means (5, 7a, 7b) for determining the rotational speed of the wheel are at least partially incorporated.

11. A wheel according to claim 10, **characterised in that** said component (30) comprises synthetic resin into which the means for determining the rotational speed of the wheel are cast.

12. A process for determining travel quantities, especially travel speed or travel distance of a user of roller skates or grass skis, moving along the ground, using the rotational speed of at least one wheel of said roller skate or grass ski,
**characterised in that**
ground contact of the wheel is taken into consideration for determining the travel quantities, and a measurement curve which describes the rotational speed of the wheel is recorded, especially continuously, whereby the ground contact is determined from kinks occurring in this measurement curve, and only measurement data of a wheel having ground contact are processed determining said travel quantities.

## Revendications

1. Roue de patin à roulettes ou de ski sur herbe ayant un axe de rotation immobilisé en rotation (9, 19) et un corps de roue qui peut tourner autour de l'axe de rotation,
**caractérisée par**
des moyens (4, 5) pour mesurer la vitesse de la roue et une électronique de commande (7) pour traiter des signaux afin de déterminer des quantités de déplacement d'un utilisateur, incluant des moyens (7, 7a, 7b) pour déterminer la vitesse de rotation de la roue à partir de cette mesure et des moyens (7) pour déterminer un contact avec le sol de ladite roue, les moyens (4, 5) pour mesurer la vitesse de la roue et l'électronique de commande étant disposés entièrement dans la roue.

2. Roue selon la revendication 1, **caractérisée par** au moins une bobine (5) montée de manière à être immobilisée en rotation sur l'axe de rotation (9) et au moins un aimant (4) qui entoure au moins partiellement la bobine et qui est fixé sur le corps de roue (20) de manière à être immobilisé en rotation.

3. Roue selon la revendication 1, **caractérisée par** au moins un aimant (4), fixé sur l'axe de rotation de manière à être immobilisé en rotation, et au moins une bobine (5) qui entoure au moins partiellement l'aimant et qui est fixée sur le corps de roue (20).

4. Roue selon la revendication 1, **caractérisée par** au moins un dynamomètre (2), en particulier un piézoélément, pour mesurer son contact avec le sol.

5. Roue selon la revendication 4, **caractérisée en ce qu'**au moins un piézoélément (2) est disposé dans le corps de roue (21), en particulier dans une surface de roulement extérieure (1) de la roue (20) pour mesurer une force de pression.

6. Roue selon la revendication 5, **caractérisée en ce que** plusieurs piézoéléments (2) sont répartis autour de la circonférence du corps de roue (21).

7. Roue selon l'une quelconque des revendications précédentes, **caractérisée en ce que** l'aimant (4) et la bobine (5) sont configurés en tant que composants d'un générateur (14) qui est intégré dans le corps de roue de manière modulaire, dans laquelle un arbre de générateur (19) dudit générateur sert de dit axe de rotation de la roue.

8. Roue selon l'une quelconque des revendications précédentes, **caractérisée en ce qu'**elle a des moyens de liaison radio pour un transfert de données avec une autre roue (20), en particulier une roue (20) d'un second patin à roulettes, et/ou avec un dispositif d'affichage, en particulier configuré à la manière d'une montre-bracelet, pour afficher des données déterminées.

9. Roue selon l'une quelconque des revendications précédentes, **caractérisée en ce que** les moyens pour déterminer un contact avec le sol incluent un dispositif pour enregistrer une courbe de mesure qui décrit la vitesse de rotation de la roue.

10. Roue selon l'une quelconque des revendications précédentes, **caractérisée par** un composant (30) disposé dans le corps de roue, fixé sur l'axe de rotation (9) de manière à être immobilisé en rotation, dans laquelle les moyens (5, 7a, 7b) pour déterminer la vitesse de rotation de la roue sont incorporés au moins en partie.

11. Roue selon la revendication 10, **caractérisée en ce que** ledit composant (30) comporte une résine synthétique dans laquelle sont coulés les moyens pour déterminer la vitesse de rotation de la roue.

12. Procédé pour déterminer des quantités de déplacement, en particulier une vitesse de déplacement ou une distance de déplacement d'un utilisateur de patins à roulettes ou de skis sur herbe, se déplaçant le long du sol, en utilisant la vitesse de rotation d'au moins une roue dudit patin à roulette ou dudit ski sur herbe,
**caractérisé en ce que**
le contact avec le sol de la roue est pris en considération pour déterminer les quantités de déplacement, et une courbe de mesure qui décrit la vitesse de rotation de la roue est enregistrée, en particulier de manière continue, de sorte que le contact avec le sol est déterminé à partir de coudes apparaissant sur cette courbe de mesure, et seules les données de mesure d'une roue ayant un contact avec le sol sont traitées en déterminant lesdites quantités de déplacement.
